# EUROPEAN PATENT SPECIFICATION

(11) **EP 3 919 646 B1**
(45) Date of publication and mention of the grant of the patent: **13.11.2024**
(21) Application number: 21152891.4
(22) Date of filing: 22.01.2021
(51) Int. Cl.: C22C 38/22, C22C 38/24, C22C 38/26, C22C 38/02, C22C 38/04, C21D 1/18, C21D 1/32, C21D 1/58, C21D 6/02, C21D 6/00, C21D 8/00, F16C 33/62, F16C 33/64, F16C 33/12, F16C 33/14

(54) **PREPARATION METHOD OF A HIGH-CARBON BEARING STEEL**
VERFAHREN ZUR HERSTELLUNG EINES KOHLENSTOFFREICHEN LAGERSTAHLS
PROCÉDÉ DE PRÉPARATION D'UN ACIER À ROULEMENTS À TENEUR ÉLEVÉE EN CARBONE

(30) Priority: 02.06.2020 CN 202010489419
(43) Date of publication of application: 08.12.2021
(73) Proprietor: Central Iron & Steel Research Institute, Beijing 100081 (CN)
(72) Inventor: CAO, Wenquan, Beijing, Beijing 100081 (CN); WENG, Yuqing, Beijing, Beijing 100081 (CN); XU, Haifeng, Beijing, Beijing 100081 (CN); WANG, Cunyu, Beijing, Beijing 100081 (CN); YU, Feng, Beijing, Beijing 100081 (CN); WANG, Hui, Beijing, Beijing 100081 (CN); SHI, Zhiyue, Beijing, Beijing 100081 (CN); XU, Da, Beijing, Beijing 100081 (CN)
(74) Representative: Wallinger Ricker Schlotter Tostmann

(56) References cited:
- JP-A- 2002 275 584
- JP-A- 2007 113 034
- JP-A- 2012 132 094
- JP-A- 2013 001 931
- JP-A- 2014 040 626
- JP-A- S6 263 650
- US-A1- 2016 145 724
- US-B2- 7 393 420

## Description

### TECHNICAL FIELD

The present invention relates to the technical field of microstructure refinement and homogenization of bearing steel, and specifically relates to a preparation method of a high-carbon bearing steel.

### BACKGROUND

Bearings are almost the essential key basic parts of all the transmissions, the fatigue life of which determines the service life and reliability of the machine and equipment. At present, civilian bearing steels such as high-carbon chromium bearing steel with thorough hardenability (e.g., GCr15, GCr15SiMn, GCr15SiMo and GCr18Mo) and stainless bearing steel (e.g., 9Cr18Mo) as well as military bearing steel such as 8Cr4Mo4V are widely used at home and abroad. Domestic and foreign aerospace, mining machinery, transportation, marine ships and other high-end equipment fields all require long life and high reliability of bearings. However, the contact fatigue life of the bearing steel used for making bearings, especially high-carbon bearing steel with thorough hardenability is generally low, which cannot meet the requirements of long service life and high reliability for high-end equipment.

To improve the fatigue life of bearing steel, a lot of researches on improving the contact fatigue life of bearing steel have been carried out at home and abroad, which mainly employ the means of reducing the content of inclusions contained in the bearing steel, decreasing the size of inclusions in the bearing steel, and controlling the types and distribution of inclusions in the bearing steel. Under the guidance of this thought, by reducing the oxygen content in the bearing steel from 30∼50 ppm to the current 3∼5 ppm, the contact fatigue life of the commercialized bearing steel GCr15 at home and abroad is improved from L₁₀ ≥ 10⁵ times for steel smelted in the atmosphere in 1950s to L₁₀ ≥ 10⁷ times for steel refined out of furnace in 1990s. Further upon nearly 30 years of cross-century development, at present, the fatigue life of the high-carbon bearing steel GCr15 refined out of furnace has been kept at L₁₀ ≥ 1~2×10⁷ times, and there has been no further progress, so the requirements of long life and high reliability for high-end equipment cannot be satisfied. Therefore, employing an out-of-furnace refining process to further reduce the oxygen content and decrease the size and content of inclusions not only greatly increases the cost and reduces the production efficiency, furthermore, the contact fatigue life cannot be enhanced greatly. Therefore, high-end bearings used in railway, shield, machine tools and the like require Electro-slag Remelting (ESR) GCr15 (L₁₀ ≥ 3.0×10⁷ times) and double vacuum (Vacuum Induction Melting (VIM) + Vacuum Arc Remelting (VAR)) GCr15 (L₁₀ ≥ 4.5× 10⁷ times) which are expensive and have long contact fatigue life. However, with respect to the production and sales volume of more than 10 million tons of bearing steel, ESR bearing steel and VIM+VAR bearing steel cannot meet the production requirement, meanwhile the cost is greatly increased (2 to 4 times higher than the cost of bearing steel refined out of furnace, respectively).

Research results at home and abroad show that, the contact fatigue life of bearing steel is not only affected by the inclusions, but also dependent on the thickness of the matrix of bearing steel, the size and distribution of carbides and the content of residual austenite in the steel. Studies have shown that the grain size of the bearing steel GCr15 and carbides can be refined by one time through integral double refinement and heat treatment, thereby enhancing the fatigue life of bearing steel by over 5 times. The content of austenite on the surface of bearing steel can be increased to 15~30 % by surface hardening heat treatment, thereby enhancing the contact fatigue life of bearing steel by 5∼10 times. The surface of bearing steel GCr15 is carburized to enhance the hardness of the bearing steel surface and control the carbides, thus enhancing the contact fatigue life of bearing steel by over 10 times. However, the above heat treatments not only increase the manufacturing difficulty of bearings and reduce the accuracy of bearings, but also greatly increase the manufacturing cost of bearings.

The JP 2002 275584 A discloses a steel for bearing element parts having good machinability and rolling fatigue life. The steel contains 0.8 to 1.2 % of C, 0.2 to 2.0 % of Si, 0.2 to 1.5 % of Mn, 0.6 to 2.0 % of Cr, ≤ 0.05 % of Al, ≤ 2.0 % ofCu, ≤ 4.0 % of Ni, ≤ 0.5 % of Mo, ≤ 0.2 % of V, ≤ 0.10 % of Nb, ≤ 0.003 % of Ca and ≤ 0.003 % of Mg, and the balance is Fe with impurities. The relation among Si, Mn, Cr and Mo satisfies 5.0 ≤ 1.6 × % Si + 4.0 × % Mn + 3.0 × % Cr + 5.0 × % Mo ≤ 9.0, and the concentration of Cr + Mn in cementite is ≥ 5.0 %.

The US 7,393,420 B2 discloses steel tubes for bearing element parts. The steel tube is specified on specific compositions and an accumulation intensity of {211} face with an impact property at ambient temperature in the longitudinal direction, and it has good machinability and fatigue life in rolling contact.

The JP 2014 040626 A discloses a bearing steel achieving good rolling fatigue characteristics. A micro structure of the bearing steel is ferrite, an average equivalent circle diameter of carbides contained in the ferrite structure is 0.30 to 0.50 µm, and a standard deviation σ of the equivalent circle diameters of the carbides is 0.18 µm or less.

The JP 2007 113034 A discloses a bearing steel for manufacturing a bearing member superior in workability and rolling fatigue characteristics when used in a high-temperature environment. The bearing steel comprises 0.8 to 1.2 % of C, 0.35 to 0.99 % of Si, 0.1 to 0.4 % of Mn, 1,35 to 1.75 % of Cr, 0.26 to 0.4 % of Mo and the balance of Fe with impurities. The C, Si and Mo satisfy the expression 0.60 ≤ [C] × ([Si] + [Mo]) ≤ 1.00, and the carbides have a particle size controlled to 5 µm or smaller.

The JP 2013 001931 A discloses a spheroidizing heat treated steel material for bearing with an improved rolling fatigue life. In the surface parallel to the rolling direction of the steel material, when an EPMA line analysis is carried out in the direction vertical to the rolling direction, the following relation is satisfied: (standard deviation σ of X-ray intensity values of Cr/average value a of X-ray intensity values of Cr) ≤ 0.25; (standard deviation σ of spheroidized cementite particle diameters/average value of spheroidized cementite particle diameters) < 0.15.

The JP S62 63650 A discloses bearing steel with good durability and life by incorporating an adequate ratio of C, Si, Mn and Cr into the steel, decreasing the contents of P, S, O and Ti as far as possible, and decreasing the contents of oxide and sulfide inclusions as far as possible.

The JP 2012 132094 A discloses a bearing material having long rolling fatigue life. The bearing material has the following properties: when an area to be tested is 3,000 mm, the total number of oxide-based nonmetallic inclusions and sulfide-containing oxide-based nonmetallic inclusions with an average diameter of 3 µm or more is ≤ 100 pieces per 1,000 mm, and the total number of oxide-based nonmetallic inclusions and sulfide-containing oxide-based nonmetallic inclusions with an average diameter of 10 µm or more is ≥ 2 pieces per 1,000 mm.

### SUMMARY

The present invention is intended to provide a preparation method of a high-carbon bearing steel, in which no special heat treatment is required and microalloying elements are only utilized to enhance the anti-fatigue life of high-carbon bearing steel, thus meeting the extensive performance requirements of long life, high reliability and low cost for bearing steel used in high-end equipment.

The problem of the present invention is solved by a preparation method of a high-carbon bearing steel according to the independent claim 1.

In the present invention, microalloying elements such as Nb, Mo and V, in combination with other elements, are added into the high-carbon bearing steel to effectively refine the matrix of bearing steel, refine the carbides in the bearing steel, and promote the precipitation of a large amount of nano-carbides, thereby enhancing the mechanical properties and the contact fatigue life of the high-carbon bearing steel. Results from examples show that, the fatigue life of the bearing steel containing Nb, Mo and V in the present invention has been enhanced by 3~14 times compared to the bearing steel without microalloying elements.

### BRIEF DESCRIPTION OF THE DRAWINGS

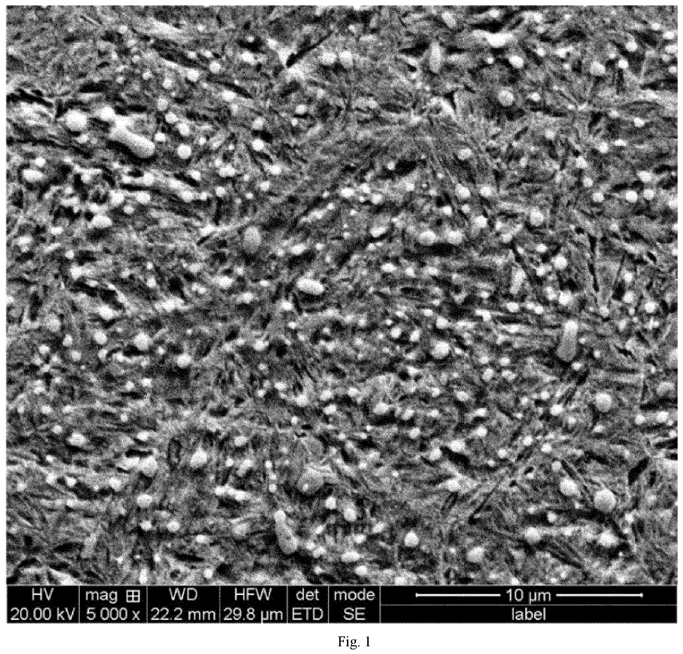

Fig. 1 is the SEM diagram of the steel MA5 smelted in the laboratory after tempering.

### DETAILED DESCRIPTION

The present invention provides a high-carbon bearing steel, the chemical composition is as below: C: 0.80~1.20 wt%, Cr: 0.40~2.0 wt%, Mn: 0.15~0.75 wt%, Si: 0.15~0.75 wt%, Nb: 0.03∼0.20 wt%, Mo: 0.03∼0.20 wt%, optionally V: 0.03∼0.20 wt%, P ≤ 0.015 wt%, S ≤ 0.01 wt%, the remaining is Fe and unavoidable impurities; wherein the total quantity of Nb, Mo and V is 0.15 to 0.30 wt%.

The high-carbon bearing steel provided by the present invention comprises C: 0.80∼1.20 wt%, preferably 0.9∼1.1 wt%, and more preferably 0.95∼1.05 wt%.

The high-carbon bearing steel provided by the present invention comprises Cr: 0.40∼2.0 wt%, preferably 0.5∼1.8 wt%, and more preferably 1.0~1.6 wt%.

The high-carbon bearing steel provided by the present invention comprises Mn: 0.15∼0.75 wt%, preferably 0.20∼0.60 wt%, and more preferably 0.3∼0.5 wt%.

The high-carbon bearing steel provided by the present invention comprises Si: 0.15∼0.75 wt%, preferably 0.20∼0.70 wt%, and more preferably 0.30∼0.60 wt%.

The high-carbon bearing steel provided by the present invention comprises P ≤ 0.015 wt%, preferably 0.001∼0.015 wt%.

The high-carbon bearing steel provided by the present invention comprises S ≤ 0.01 wt%, preferably 0.001∼0.01 wt%.

The high-carbon bearing steel provided by the present invention comprises Nb: 0.03∼0.20 wt%, preferably 0.05∼0.15 wt%.

The high-carbon bearing steel provided by the present invention comprises Mo: 0.03∼0.20 wt%, preferably 0.05∼0.15 wt%.

The high-carbon bearing steel provided by the present invention comprises optionally V: 0.03~0.20 wt%, and preferably 0.05~0.10 wt%.

In the present invention, the total quantity of Nb, Mo and V is 0.15∼0.30 wt%, and preferably 0.25∼0.30 wt%.

In the present invention, microalloying elements such as Nb, Mo and V, in combination with other elements, are added into the high-carbon bearing steel to effectively refine the matrix of bearing steel, refine the carbides in the bearing steel, and promote the precipitation of a large amount of nano-carbides, thereby enhancing the mechanical properties and the contact fatigue life of the high-carbon bearing steel.

The present invention provides a preparation method of the high-carbon bearing steel in the above solution, comprising the following steps:
Preparation raw materials of the high-carbon bearing steel are smelted to get steel ingots; the steel ingots have a chemical composition corresponding to the chemical composition of the high-carbon bearing steel in the above solution;
The steel ingots are homogenized and then processed into bars;
The bars are successively subject to spheroidizing annealing, quenching and tempering to get the high-carbon bearing steel;
wherein the smelting process is an electro-slag remelting, Vacuum Induction Melting + Vacuum Arc Remelting, an out-of-furnace refining or a vacuum induction melting,
wherein the temperature for the homogenization is 1100 to 1250 °C, and the holding time is 2 to 6 hours,
wherein after completion of the homogenization, the bars are processed by a hot forging or a hot rolling to obtain processed bars, and the processed bars are cooled in air to room temperature, and the temperature for the hot forging or the hot rolling is 1150 to 1200 °C,
wherein the process of the spheroidizing annealing comprises: the bars are held at 800 to 860 °C for 0.5 to 12 hours, then cooled down to 680 to 740 °C and held for 0.5 to 12 hours, and finally cooled in the air to room temperature,
wherein the temperature for the quenching is 820 to 860 °C, the holding time is 0.10 to 1.0 hours; and the cooling process for the quenching is an oil quenching,
wherein the temperature for the tempering is 130 to 200 °C, the holding time is 0.5 to 3.5 hours; and the cooling process for the tempering is an air cooling.

In the present invention, preparation raw materials of the high-carbon bearing steel are smelted to get steel ingots. In the present invention, the smelting way is electro-slag remelting (ESR), double vacuum melting (VIM + VAR), out-of-furnace refining or vacuum induction melting. The present invention has no special requirement on the process of smelting, any processes that are well known in the art such as electro-slag remelting (ESR), double vacuum melting (VIM + VAR), out-of-furnace refining or vacuum induction melting, can be used. The smelting of the present invention is suitable for a converter, an electric furnace or an induction furnace. In the present invention, the chemical composition of the steel ingots corresponds to the chemical composition of the high-carbon bearing steel in the above solution. The present invention has no special requirements on the types and sources of various preparation raw materials, as long as meeting the requirement on the ingredients of the steel ingots. In the present invention, smelting is carried out so that the oxygen content in the bearing steel is not higher than 20 ppm and the size of large granular inclusions (DS) is ≤ 40 microns.

In the present invention, after the steel ingots are obtained, they are homogenized and then processed into bars.

In the present invention, the temperature for homogenization is 1100∼1250 °C, and preferably 1150∼1200 °C; the holding time is 2∼6 hours, and preferably 3∼5 hours. Upon the completion of homogenization, the resulting billet is processed into bars. In the present invention, the processing way is hot forging or hot rolling, and the temperature for hot forging or hot rolling is 1150∼1200 °C. The present invention has no special requirement on the size of the bars, as long as being set according to the requirements on the bearing steel. In the examples of the present invention, the size of the bars is Φ60 mm. In the present invention, the processed bars are cooled in the air to room temperature, and then subject to the subsequent steps.

In the present invention, after the bars are obtained, they are spheroidizing annealed to get the annealed bars.

In the present invention, the process of spheroidizing annealing comprises: the bars are held at 800∼860 °C for 0.5-12 hours, then cooled down to 680∼740 °C and held for 0.5-12 hours, and finally cooled in the air to room temperature. In the present invention, spheroidizing annealing is carried out to get uniform fine carbides.

In the present invention, after the annealed bars are obtained, they are quenched to get the quenched bars. In the present invention, the temperature for quenching is 820∼860 °C, and preferably 840 °C, the holding time is 0.1~1.0 hours, and preferably 0.5 hours; the cooling way for quenching is oil quenching. The present invention has no special requirement on the process of oil quenching, and any oil quenching well known in the art can be used.

In the present invention, after the quenched bars are obtained, they are tempered to get the high-carbon bearing steel. In the present invention, the temperature for tempering is 130∼200 °C, and preferably 170 °C, the holding time is 0.5∼3.5 hours, and preferably 3 hours; the cooling way for tempering is air cooling. Quenching and tempering are employed in the present invention so as to get ultrafine original austenite tissues and carbide particles, wherein the grain size of the original austenite is not less than grade 10.

The high-carbon bearing steel provided by the present invention and the preparation method thereof will be illustrated in detail below in combination with the following examples, which are not construed as the limitation on the protection scope of the present invention.

### Example 1

The steel of the present invention is smelted in a laboratory vacuum induction melting furnace, and casted into round ingots of 50 kg. 10 furnaces of steel are totally smelted for forging into rod-like samples, with the chemical ingredients shown in Table 1. MA5, MA7, and MA8 steel are the microalloying bearing steel of the present invention; MA1-MA4, MA6, MA9, MA10 are reference bearing steels, and C1-C3 are the bearing steel used as the control (wherein, the preparation method of round ingots is: C1 is GCr15 smelted in a laboratory vacuum induction melting furnace, C2 is GCr15 refined out of the furnace, and C3 is double vacuum GCr15).

The round ingots of the MA1-MA10 steels and the C1-C3 steels above are homogenized at a high temperature of 1200 °C for 5 hours for the subsequent forging-cogging. The initial forging temperature is 1150 °C, the initial section size is 120 mm casting blank, which is radially forged into round bars with a section size of 60 mm, and then cooled in the air. The round bars with a diameter of 60 mm are spheroidizing annealed (being held at 820 °C for 6 hours, then cooled down to 720 °C and held for 6 hours, and finally cooled in the air to room temperature), and then quenched (being held at 840 °C for 0.5 hours, followed by oil quenching) and tempered at low temperature (being held at 170 °C for 3 hours, followed by air cooling) to get the high-carbon bearing steel.

MA1-MA10 and C1-C3 are tested for their mechanical properties, impact toughness and contact fatigue life (Tensile test: the tensile rate is 10⁻⁴/s, and the elongation adopts A5; Impact test: the size for impacting samples is U-shaped impact of 10 mm × 10 mm × 55 mm; Contact fatigue test: a thrust plate test with a maximum Hertz stress of 4.5 GPa), with the results shown in Table 2.

**Table 1 Chemical compositions of steel of the present invention reference steel and traditional steel (wt%)**

| | | C | Cr | Si | Mn | S | P | Mo | Nb | V |
|---|---|---|---|---|---|---|---|---|---|---|
| Steel of the present invention, reference steel | MA1 | 0.80 | 0.4 | 0.75 | 0.75 | 0.010 | 0.010 | - | - | 0.05 |
| | MA2 | 0.91 | 0.8 | 0.58 | 0.64 | 0.010 | 0.015 | - | 0.05 | - |
| | MA3 | 0.95 | 1.42 | 0.55 | 0.60 | 0.010 | 0.015 | 0.05 | - | 0.15 |
| | MA4 | 0.95 | 1.41 | 0.30 | 0.35 | 0.010 | 0.015 | 0.02 | 0.08 | - |
| | MA5 | 1.00 | 1.52 | 0.30 | 0.30 | 0.005 | 0.010 | 0.10 | 0.10 | - |
| | MA6 | 1.01 | 1.52 | 0.30 | 0.35 | 0.005 | 0.010 | | 0.20 | |
| | MA7 | 1.02 | 1.48 | 0.25 | 0.25 | 0.005 | 0.005 | 0.05 | 0.20 | - |
| | MA8 | 1.12 | 1.80 | 0.30 | 0.35 | 0.004 | 0.010 | 0.10 | 0.15 | 0.05 |
| | MA9 | 1.20 | 2.00 | 0.15 | 0.15 | 0.010 | 0.015 | 0.20 | 0.05 | 0.10 |
| | MA10 | 1.20 | 1.51 | 0.36 | 0.29 | 0.005 | 0.010 | | | 0.09 |
| Comparative steel | C1 | 1.02 | 1.48 | 0.35 | 0.38 | 0.005 | 0.005 | - | - | - |
| | C2 | 1.00 | 1.41 | 0.30 | 0.35 | 0.005 | 0.010 | - | - | - |
| | C3 | 0.80 | 1.48 | 0.36 | 0.41 | 0.010 | 0.015 | - | - | - |

**Table 2 Results of mechanical properties and fatigue performances of the steel of the present invention, reference steel and traditional-steel (wt%)**

| | | Rm (MPa) | A5 (%) | Aku (J) | L₁₀ (10⁷ times) |
|---|---|---|---|---|---|
| Steel of the present invention, reference steel | MA 1 | 2450 | 4.5 | 16.0 | ≥2.8 |
| | MA2 | 2520 | 4.3 | 13.0 | ≥2.1 |
| | MA3 | 2490 | 3.0 | 12.0 | ≥4.5 |
| | MA4 | 2510 | 3.9 | 11.0 | ≥6.5 |
| | MAS | 2570 | 4.2 | 11.0 | ≥10 |
| | MA6 | 2590 | 5.0 | 12 | ≥4.7 |
| | MA7 | 2530 | 3.8 | 10.5 | ≥8.2 |
| | MA8 | 2510 | 3.3 | 10.0 | ≥10 |
| | MA9 | 2493 | 3.0 | 8.9 | ≥4.3 |
| | MA10 | 2430 | 2.0 | 8.5 | ≥2.7 |
| Comparative steel | C1 | 2230 | 1.5 | 7.0 | ≥0.7 |
| | C2 | 2380 | 1.5 | 4.8 | ≥1.0 |
| | C3 | 2460 | 2.0 | 5.6 | ≥4.5 |

It can be seen from Table 2 that, microalloying of Nb, V and Mo greatly enhances the tensile strength (Rm), the elongation (A5) and the impact toughness (Aku) of bearing steel. This mainly attributes to the ultrafine matrix and the ultrafine size of carbides. As shown in Fig. 1, a large amount of carbides are finely and uniformly distributed in the high-carbon bearing steel, and the average size of carbides is 0.28 microns, which is finer than the carbides of traditional GCr15 by about 1 time. At the same time, due to the microstructure refinement and enhanced mechanical properties for the steel of the present invention, the contact fatigue life L₁₀ of microalloying bearing steel is enhanced by 3~14 times compared to L₁₀ of laboratory smelted bearing steel without microalloying (C1). Meanwhile, compared to the contact fatigue life of industrialized out-of-furnace refined steel GCr15 (C2) and double vacuum GCr15 (C3), it is also enhanced significantly. For example, compared to out-of-furnace refined GCr15, the fatigue life is enhanced by 2~10 times; and compared to double vacuum GCr15, the fatigue life also reaches 0.5∼2.2 times. At the same time, it can be found from the comparison between Table 1 and Table 2 that, when the total quantity of the compound microalloying is in a range of 0.10∼0.30 %, the contact fatigue performance can be enhanced better. The characteristics of low cost and long life for the steel of the present invention will greatly improve the service life and reliability of high-end equipment, thus having huge market application potentials in aerospace, mining machinery, transportation, marine ships and other fields.

The foregoing is only a preferable implementation of the present invention.

## Claims

1. A preparation method of a high-carbon bearing steel, comprising the following steps:
preparation raw materials of the high-carbon bearing steel are smelted to get steel ingots; the steel ingots having a chemical composition corresponding to the chemical composition of the high-carbon bearing steel as below:
C: 0.80 to 1.20 wt%, Cr: 0.40 to 2.0 wt%, Mn: 0.15 to 0.75 wt%, Si: 0.15 to 0.75 wt%, Nb: 0.03 to 0.20 wt%, Mo: 0.03 to 0.20 wt%, optionally V: 0.03 to 0.20 wt%, P ≤ 0.015 wt%, S ≤ 0.01 wt%, the remaining is Fe and unavoidable impurities; wherein the total quantity of Nb, Mo and V is 0.15 to 0.30 wt%;
the steel ingots are homogenized and then processed into bars;
the bars are successively subjected to a spheroidizing annealing, a quenching and a tempering to get the high-carbon bearing steel,
wherein the smelting process is an electro-slag remelting, Vacuum Induction Melting + Vacuum Arc Remelting, an out-of-furnace refining or a vacuum induction melting,
wherein the temperature for the homogenization is 1100 to 1250 °C, and the holding time is 2 to 6 hours,
wherein after completion of the homogenization, the bars are processed by a hot forging or a hot rolling to obtain processed bars, and the processed bars are cooled in air to room temperature, and the temperature for the hot forging or the hot rolling is 1150 to 1200 °C,
wherein the process of the spheroidizing annealing comprises: the bars are held at 800 to 860 °C for 0.5 to 12 hours, then cooled down to 680 to 740 °C and held for 0.5 to 12 hours, and finally cooled in the air to room temperature,
wherein the temperature for the quenching is 820 to 860 °C, the holding time is 0.10 to 1.0 hours; and the cooling process for the quenching is an oil quenching,
wherein the temperature for the tempering is 130 to 200 °C, the holding time is 0.5 to 3.5 hours; and the cooling process for the tempering is an air cooling.

## Patentansprüche

1. Verfahren zur Herstellung eines kohlenstoffreichen Wälzlagerstahls, welches die folgenden Schritte umfasst,
dass die Rohstoffe zur Herstellung des kohlenstoffreichen Wälzlagerstahls geschmolzen werden, um Stahlblöcke zu erhalten; wobei die Stahlblöcke eine chemische Zusammensetzung aufweisen, die der chemischen Zusammensetzung des kohlenstoffreichen Wälzlagerstahls wie folgt entspricht:
C: 0,80 bis 1,20 Gewichtsprozent, Cr: 0,40 bis 2,0 Gewichtsprozent, Mn: 0,15 bis 0,75 Gewichtsprozent, Si: 0,15 bis 0,75 Gewichtsprozent, Nb: 0,03 bis 0,20 Gewichtsprozent, Mo: 0,03 bis 0,20 Gewichtsprozent, optional V: 0,03 bis 0,20 Gewichtsprozent, P ≤ 0,015 Gewichtsprozent, S ≤ 0,01 Gewichtsprozent, der Rest ist Fe und unvermeidbare Verunreinigungen; wobei die Gesamtmenge an Nb, Mo und V 0,15 bis 0,30 Gewichtsprozent beträgt;
dass die Stahlblöcke homogenisiert und dann zu Stäben verarbeitet werden;
dass die Stäbe nacheinander einem kugelförmigen Glühen, einem Abschrecken und einem Anlassen unterzogen werden, um den kohlenstoffreichen Wälzlagerstahls zu erhalten,
wobei der Schmelzprozess ein Elektroschlacke-Umschmelzen, ein Doppelvakuumschmelzen, ein Vakuuminduktionsschmelzen + Vakuumlichtbogen-Umschmelzen, ein Raffinieren außerhalb des Ofens oder ein Vakuuminduktionsschmelzen ist,
wobei die Temperatur für die Homogenisierung 1100 bis 1250 °C beträgt und die Haltezeit 2 bis 6 Stunden beträgt,
wobei die Stäbe nach Abschluss der Homogenisierung durch ein Warmschmieden oder ein Warmwalzen zu bearbeiteten Stäben verarbeitet werden und die bearbeiteten Stäbe an Luft auf Raumtemperatur abgekühlt werden und die Temperatur für das Warmschmieden oder das Warmwalzen 1150 bis 1200 °C beträgt,
wobei der Prozess des kugeligen Glühens umfasst, dass die Stäbe 0,5 bis 12 Stunden bei 800 bis 860°C gehalten werden, dann auf 680 bis 740 °C abgekühlt und 0,5 bis 12 Stunden gehalten und schließlich an der Luft auf Raumtemperatur abgekühlt,
wobei die Temperatur für das Abschrecken 820 bis 860°C beträgt, die Haltezeit 0,10 bis 1,0 Stunden beträgt und der Kühlprozess für das Abschrecken ein Ölabschrecken ist,
wobei die Anlasstemperatur 130 bis 200°C beträgt, die Haltezeit 0,5 bis 3,5 Stunden beträgt und der Abkühlvorgang für das Anlassen eine Luftkühlung ist.

## Revendications

1. Procédé de préparation d'un acier à roulements à teneur élevée en carbone, comprenant les étapes suivantes :
les matières premières de préparation de l'acier à roulements à teneur élevée en carbone sont fondues pour obtenir des lingots d'acier ; les lingots d'acier présentant une composition chimique correspondant à la composition chimique de l'acier à roulements à teneur élevée en carbone comme ci-dessous :
C : 0,80 à 1,20 % en poids, Cr : 0,40 à 2,0 % en poids, Mn : 0,15 à 0,75 % en poids, Si : 0,15 à 0,75 % en poids, Nb : 0,03 à 0,20 % en poids, Mo : 0,03 à 0,20 % en poids, facultativement V : 0,03 à 0,20 % en poids, P ≤ 0,015 % en poids, S ≤ 0,01 % en poids, le reste est Fe et des impuretés inévitables ; dans lequel la quantité totale de Nb, Mo et V est de 0,15 à 0,30 % en poids ;
les lingots d'acier sont homogénéisés et ensuite transformés en barres ;
les barres sont successivement soumises à un recuit de sphéroïdisation, une trempe et un revenu pour obtenir l'acier à roulements à teneur élevée en carbone,
dans lequel le procédé de fusion est une refusion sous laitier électroconducteur, une fusion par induction sous vide + refusion par arc sous vide, un raffinage hors four ou une fusion par induction sous vide,
dans lequel la température pour l'homogénéisation est de 1100 à 1250 °C, et le temps de maintien est de 2 à 6 heures,
dans lequel après la fin de l'homogénéisation, les barres sont traitées par forgeage à chaud ou laminage à chaud pour obtenir des barres traitées, et les barres traitées sont refroidies à l'air jusqu'à température ambiante, et la température pour le forgeage à chaud ou le laminage à chaud est de 1150 à 1200 °C,
dans lequel le procédé de recuit de sphéroïdisation comprend : les barres sont maintenues à 800 à 860 °C pendant 0,5 à 12 heures, puis refroidies jusqu'à 680 à 740 °C et maintenues pendant 0,5 à 12 heures, et finalement refroidies à l'air jusqu'à température ambiante,
dans lequel la température pour la trempe est de 820 à 860 °C, le temps de maintien est de 0,10 à 1,0 heure ; et le procédé de refroidissement pour la trempe est une trempe à l'huile,
dans lequel la température pour le revenu est de 130 à 200°C, le temps de maintien est de 0,5 à 3,5 heures ; et
le procédé de refroidissement pour le revenu est un refroidissement à l'air.
